# EUROPÄISCHE PATENTANMELDUNG

(11) **EP 4 683 189 A1**
(43) Veröffentlichungstag der Anmeldung: **21.01.2026**
(21) Anmeldenummer: 25186029.2
(22) Anmeldetag: 27.06.2025
(51) Int. Cl.: H02K 15/36

(54) **VERFAHREN ZUM UMFORMEN VON LEITERSTÜCKEN IN EINEM STATOR**

(30) Priorität: 15.07.2024 DE 102024120179
(71) Anmelder: Gehring Technologies GmbH + Co. KG, 73760 Ostfildern (DE)
(72) Erfinder: Starke, Stephan, 73734 Esslingen (DE); Bartsch, Florian, 70376 Stuttgart (DE); Litty, Klaus, 71394 Kernen (DE); Wiens, Andreas, 74343 Sachsenheim (DE)
(74) Vertreter: DREISS Patentanwälte PartG mbB

(57) **Zusammenfassung**

Die Erfindung betrifft ein Verfahren zum Umformen von Leiterstücken in einem Stator.

## Beschreibung

Die vorliegende Erfindung betrifft ein Verfahren zum Umformen von Leiterstücken bzw. Steckspulen in einem Stator bzw. der Position der freien Enden der Steckspulen.

Der Stator umfasst ein Blechpaket und die Steckspulen (Im Folgenden auch als Leiterstücke bezeichnet). Die Steckspulen weisen freie Enden auf, die aus dem Blechpaket herausragen. Steckspulen können Einzelpins oder auch beispielsweise Hairpins sein. Mit Hairpins werden üblicherweise U-förmig ausgebildete Steckspulen, mit zwei Schenkeln mit jeweiligen freien Enden und einem diese Schenkel verbindenden Verbindungsabschnitt bezeichnet. Der Verbindungsabschnitt liegt dabei den freien Enden gegenüber.

Die Steckspulen sind dabei üblicherweise derart angeordnet, dass die Steckspulen auf mehreren in einer Umfangsrichtung verlaufenden Kreisbahnen in Reihen, die jeweils in einer Radialrichtung erstreckt sind, angeordnet sind. Dabei ragen die freien Enden der Schenkel/Leiterstücke auf einer Seite des Stators aus diesem hinaus und die Verbindungsabschnitte (im Fall von Hairpins) sind auf der anderen Seite des Stators angeordnet.

Nach dem Einsetzen werden die freien Enden in Umfangsrichtung verdreht bzw. verbogen, wobei dieser Schritt auch als "Twisten" bezeichnet wird. Dabei werden einzelne Steckspulen (allgemein Leiterstücke bzw. deren freie Enden) im Uhrzeigersinn und andere gegen den Uhrzeigersinn in Umfangsrichtung verdreht. Typischerweise werden die Steckspulen derart verdreht, dass sie nach dem Verdrehen in einer direkt benachbarten Reihe oder einer übernächsten Reihe angeordnet sind (denkbar ist auch, dass weitere Reihen übersprungen werden). Das Twisten wird beispielsweise mittels Zylindern mit Leiterstückaufnahmen (auch als Twist-Kronen bezeichnet) durchgeführt, die konzentrisch zueinander angeordnet sind und die rotierbar im Werkzeug angeordnet sind. Auf Ihrer den Leiterstücken zugewandten Seite weisen die Zylinder jeweils Aufnahmen auf, bspw. in Form von Nuten, in welche die freien Enden aufgenommen werden können. Dabei sind während des Twistens jeweils Leiterstücke, die auf einer Kreisbahn angeordnet sind, in einem Zylinder in entsprechenden Aufnahmen aufgenommen. Das Verdrehen der Zylinder zueinander verbiegt die Leiterstücke auf benachbarten Kreisbahnen in unterschiedliche Richtungen.

Nach dem Setzen der Leiterstücke, also dem Einbringen in das Blechpaket des Stators, aber noch vor dem Arbeitsschritt "Twisten" werden die Steckspulen üblicherweise radial auswärts oder radial einwärts gebogen. Dieser Schritt wird üblicherweise als "Aufweiten" bezeichnet.

Im Anschluss an das Twisten werden die Hairpins üblicherweise abgelängt (auf eine vorgesehene Länge gekürzt) und anschließend bestimmte Hairpins/Leiterstücke bzw. deren freie Enden miteinander verschweißt, um so die Wicklungen des Stators zu bilden.

Es ist Aufgabe der vorliegenden Erfindung ein Verfahren bereitzustellen, das sicherstellt, dass Leiterstückenden zuverlässig umgeformt, also aufgeweitet oder getwistet werden können.

Diese Aufgabe wird erfindungsgemäß durch nachfolgend beschriebenes Verfahren sowie die in den Ansprüchen definierten Verfahren gelöst.

Erfindungsgemäß ist ein Verfahren zum Umformen von Steckspulen in einem Stator vorgesehen. Das Verfahren umfasst mehrere Schritte.

In einem ersten Schritt (Schritt I) erfolgt ein Bereitstellen eines Stators mit Steckspulen, wobei freie Enden der Steckspulen auf einer Seite des Stators aus diesem herausragen und sich in einer Ist-Ausgangsposition befinden.

In einem weiteren Schritt (Schritt II) erfolgt ein Identifizieren der Ist-Ausgangsposition wenigstens eines freien Endes eines umzuformenden Leiterstücks. Die Ist-Ausgangsposition ist die Position in der sich das freie Ende tatsächliche befindet, bevor das Leiterstück umgeformt wird. In verschiedenen Stator-Typen unterscheiden sich die Soll-Ausgangsposition, also die Positionen in denen die freien Enden sich idealerweise befinden sollten. Bspw. haben unterschiedliche Statoren unterschiedliche Durchmesser oder unterschiedliche Abstände in Umfangsrichtung zwischen den Leiterstücken oder es sind unterschiedlich viele Leiterstücke in radial erstreckten Reihen angeordnet.

Nach dem Identifizieren der Ist-Ausgangsposition kann vorgesehen sein, dass basierend auf den identifizierten Ist-Ausgangspositionen eine Identifikation eines Stator Typs erfolgt. Hierzu kann bspw. die Ist-Ausgangsposition mit Soll-Ausgangspositionen verschiedener bekannter Stator-Typen verglichen werden und so der zur Bearbeitung anstehende Stator-Typ (also um welche Art Stator es sich handelt) identifiziert werden. Dies kann insbesondere in der Kleinserien und Prototypen Fertigung interessant sein. Anhand des identifizierten Stator-Typs können dann die gewünschten Soll-Zielposition ermittelt werden.

In einem weiteren Schritt (Schritt III) kann ein Bestimmen einer Umformbewegung erfolgen. Mittels der Umformbewegung kann das freie Ende des umzuformenden Leiterstücks von der Ist-Ausgangsposition in eine Zielposition (Z) umgeformt werden. Die Zielposition entspricht dabei wenigstens in einer Richtung der Soll-Zielposition des umzuformenden Leiterstücks. Die Soll-Zielposition ist die gewünschte Position des freien Endes, wenn der Umformschritt abgeschlossen ist. Die Umformbewegung kann insbesondere die benötigte Bewegung eines Umformwerkzeugs sein, welches das Leiterstück umformt. Beispielsweise kann die Zielposition der Soll-Zielposition wenigstens in radialer Richtung entsprechen. Alternativ oder zusätzlich kann die Zielposition der Soll-Zielposition wenigstens in umfänglicher Richtung entsprechen.

In einem weiteren Schritt (Schritt IV) erfolgt ein Erfassen des freien Endes des umzuformenden Leiterstücks mittels des Umformwerkzeugs. Eine Abweichung der Ist-Ausgangsposition von einer Soll-Ausgangsposition des freien Endes des umzuformenden Leiterstücks wird bei diesem Erfassen in wenigstens einer radialen Richtung und/oder einer umfänglichen Richtung berücksichtigt. Das Umformwerkzeug erfasst das umzuformende Leiterstück in seiner Ist-Ausgangsposition. Die Bewegung des Umformwerkzeugs zum Erfassen ist also, wenigstens in einer Richtung, auf die identifizierte Ist-Ausgangsposition abgestimmt. Ohne die identifizierte Ist-Ausgangsposition könnte das Umformwerkzeug lediglich die Soll-Ausgangsposition für einen bekannten Stator-Typ anfahren. Weicht die tatsächliche Position (Ist-Ausgangsposition) der Leiterstücke über eine gewisse Toleranz, die vom jeweiligen Werkzeug abhängt, hinausgehend von der Soll-Ausgangsposition ab, so kann es zu einer Schädigung des Werkstücks oder einer Schädigung des Umformwerkzeugs kommen. Ein genaues Anfahren der Ist-Ausgangsposition verhindert dies und macht damit den Prozess sicherer und erhöht dessen Qualität.

Die Berücksichtigung der Abweichung zwischen der Ist-Ausgangsposition und der Soll-Ausgangsposition kann dabei im Rahmen der Erfindung insbesondere bereits erfolgen bevor das Umformwerkzeug das Leiterstück kontaktiert. Bspw. kann das Umformwerkzeug in einem axialen Abstand in der Ebene, die durch die radiale Richtung und die Umfangsrichtung definiert ist, passend (bzw. wenigstens in radialer oder umfänglicher Richtung passend) zu den Leiterstücken oder dem Leiterstück angeordnet werden und hierbei die Positions-Abweichung in radialer und/oder umfänglicher bereits berücksichtigt werden, so dass das Umformwerkzeug anschließend durch eine rein axial gerichtete Bewegung auf das Leiterstück bzw. die Leiterstücke geführt werden kann, um diese zu kontaktieren und zu erfassen.

Das Identifizieren der Ist-Ausgangsposition kann vor oder während dem Erfassen des freien Endes erfolgen. Bspw. kann eine Vermessung der Position der freien Enden während der Bewegung des Umformwerkzeugs auf die freien Enden zu erfolgen. Dies kann die Taktzeit der Bearbeitung verbessern. Die Erfindung sieht jedoch insbesondere vor, dass das Identifizieren der Ist-Ausgangsposition vor dem Erfassen der freien Enden mit dem Umformwerkzeug erfolgt, insbesondere bevor das Umformwerkzeug in axialer Richtung auf die Leiterstücke bewegt wird, weiter insbesondere, bevor das Umformwerkzeug die Leiterstücke aus axialer Richtung kommend kontaktiert.

In einem weiteren Schritt erfolgt ein Umformen des umzuformenden Leiterstücks (oder der umzuformenden Leiterstücke) aus der Ist-Ausgangsposition in die Soll-Zielposition. Das Umformwerkzeug kann das erfasste umzuformende Leiterstück insbesondere mittels der vorher bestimmten Umformbewegung umformen. Das Umformwerkzeug kann also entlang eines Bewegungspfads geführt werden, der vorab unter Berücksichtigung der Ist-Ausgangsposition und der Soll-Zielposition ermittelt wurde. Es kann auch vorgesehen sein, dass die Soll-Zielposition iterativ angefahren wird, hierzu wird während des Umformens die Position des Umformwerkzeugs und/oder die Position des umzuformenden Leiterstücks identifiziert und das Umformwerkezeug wird, basierend auf einer noch vorhandenen Differenz der aktuell identifizierten Position zur Soll-Zielposition des Leiterstücks, weiterbewegt. Der Abgleich von aktueller Position während des Umformens und der Soll-Zielposition kann iterativ erfolgen und die Abweichung von aktueller Position und Soll-Zielposition kann mehrfach im Laufe des Umformvorgangs ermittelt werden und die Umformung (und insbesondere auch die Messung der aktuellen Position) kann abgebrochen werden, wenn die Differenz unter einem vorgegebenen Grenzwert liegt bzw. die Soll-Zielposition erreicht ist.

Die Umformbewegung kann eine Biegebewegung sein, bei der das freie Ende des umzuformenden Leiterstücks radial ein- oder auswärts bewegt wird. Typischerweise wird hierzu das Umformwerkzeug in axialem Abstand passend (in radialer und/oder umfänglicher Richtung) zu den Leiterstücken positioniert, so dass es durch eine Bewegung in axialer Richtung, bspw. ein Absenken, in Kontakt mit den Leiterstücken gebracht werden kann, um diese zu erfassen. Die Umformbewegung kann dann ein radial nach außen oder innen gerichtetes Verfahren des Umformwerkzeugs umfassen. Die Umformbewegung kann alternativ oder zusätzlich Verschwenken des Umformwerkzeugs umfassen. Eine axiale Bewegung der Abschnitte des Werkzeugs, die das Leiterstück kontaktieren kann überlagert werden, um eine durch das radiale Biegen bedingte Verkürzung zu kompensieren.

Bei dieser Umformung kann jedenfalls ein Versatz in radialer Richtung in Schritt IV berücksichtigt werden und in Schritt V die Zielposition wenigstens in radialer Richtung der Soll-Position entsprechen.

Das Umformwerkzeug kann ausgebildet sein, um ein einzelnes Leiterstück zu erfassen oder mehrere in einer in radialer Richtung erstreckten Reihe angeordnete Leiterstücke zu erfassen.

Die Abweichung der Ist-Ausgangsposition von der Soll-Ausgangsposition kann ein Versatz wenigstens eines freien Endes in radialer und/oder umfänglicher Richtung sein oder die ganze Reihe der Leiterstücke kann in radialer und/oder umfänglicher Richtung versetzt zu ihrer Soll-Ausgangsposition sein. Es können auch alle Leiterstücke auf einer Kreisbahn in Umfangsrichtung versetzt sein.

Das Umformwerkzeug kann Greifbacken aufweisen. Die Greifbacken können aufeinander zubewegbar sein. Im erfindungsgemäßen Verfahren können die Greifbacken beim Erfassen des Leiterstücks insbesondere tangential zur Umfangsrichtung aufeinander zu bewegt werden. In diesem Fall wird das Umformwerkzeug typischerweise so positioniert, dass je eine Greifbacke auf je einer Seite des Leiterstücks angeordnet ist und das Leiterstück mittig zwischen den Greifbacken, anschließend werden die Greifbacken aufeinander zubewegt, um das Leiterstück zu erfassen.

Alternativ können die Greifbacken im erfindungsgemäßen Verfahren beim Erfassen des Leiterstücks insbesondere in radialer Richtung aufeinander zu bewegt werden. In diesem Fall wird das Umformwerkzeug typischerweise so positioniert, dass je eine Greifbacke auf radial innenliegender Seite und radial außen liegender Seite des Leiterstücks angeordnet ist, anschließend werden die Greifbacken aufeinander zubewegt, um das Leiterstück zu erfassen. Insbesondere kann vorgesehen sein, dass die radial innere oder äußere Greifbacke das Leiterstück kontaktiert und in Position gehalten wird, während die andere Greifbacke auf sie zubewegt wird, um das Leiterstück zu greifen. Typischerweise sind die Leiterstücke in einer radial erstreckten Reihe derart ausgebildet, dass die Leiterstücke umso länger (in axialer Richtung) sind, je weiter radial außen sie liegen. dadurch können die Leiterstücke immer von radial innen hintergriffen werden um sie radial auswärts zu biegen. Ist ein Biegen radial einwärts vorgesehen, so ist die Längenzunahme entlang der Reihe typischerweise umgekehrt.

Es kann insbesondere vorgesehen sein, dass das Umformwerkzeug beim Erfassen das Leiterstück oder eines der umzuformenden Leiterstücke von radial innen hintergreift. Das Umformwerkzeug kann axial auf das Leiterstück bewegt werden und dieses dabei von radial hintergreifen. Das Umformwerkzeug kann hierfür eine Einführschräge aufweisen.

Es kann im Rahmen der Erfindung vorgesehen sein, dass im Rahmen der radialen Umformung (dem Aufweiten bei dem Leiterstücke radial auswärts oder einwärts umgeformt werden) eine Fehlstellung in umfänglicher Richtung mitkorrigiert wird, um beim anschließenden umfänglichen Umformen eine möglichst geringe oder keine Abweichung zwischen der identifizierten Ist-Ausgangsposition und der Soll-Ausgangsposition zu erreichen. Die Soll-Zielposition der radialen Umformung ist typischerweise die Soll-Ausgangsposition bei der nachfolgenden umfänglichen Umformbewegung.

Im Rahmen der Erfindung kann bevorzugt nur ein radialer Versatz zwischen der Ist-Ausgangsposition und der Soll-Ausgangsposition berücksichtigt werden, wenn der Umformschritt V ein radiales Umformen beinhaltet. Anschließend entspricht auch die beim Umformen in Schritt V erreichte Zielposition der Soll-Zielposition nur mit Blick auf die radiale Position. Mit anderen Worten, die erreichte Zielposition in Schritt V kann weiterhin einen umfänglichen Versatz zur Soll-Zielposition aufweisen.

Im Rahmen der Erfindung kann bevorzugt nur ein umfänglicher Versatz zwischen der Ist-Ausgangsposition und der Soll-Ausgangsposition berücksichtigt werden, wenn der Umformschritt V ein umfängliches Umformen beinhaltet. Anschließend entspricht auch die beim Umformen in Schritt V erreichte Zielposition der Soll-Zielposition nur mit Blick auf die umfängliche Position. Mit anderen Worten, die erreichte Zielposition in Schritt V kann weiterhin einen radialen Versatz zur Soll-Zielposition aufweisen.

Bevorzugt wird im Rahmen der Durchführung des Verfahrens zur radialen Umformung ein radialer Versatz berücksichtigt und in der Zielposition eliminiert und anschließend wird bei einer erneuten Durchführung des Verfahrens, diesmal zur umfänglichen Umformung, ein umfänglicher Versatz berücksichtigt und in der Zielposition eliminiert.

Die Zielposition der Durchführung des Verfahrens zum radialen Umformen (Schritt V) kann insbesondere der Ist-Ausgangsposition der erneuten Durchführung des Verfahrens zum umfänglichen Umformen (weiterer Schritt V) entsprechen.

Die Umformbewegung in Schritt V kann eine Biegebewegung sein, bei der mehrere freie Enden umzuformender Leiterstücke in einer umfänglichen Richtung bewegt werden. Die Umformbewegung kann also eine Twistbewegung sein. Dabei kann vorgesehen sein, dass jedenfalls ein Versatz in umfänglicher Richtung in Schritt IV berücksichtigt ist und in Schritt V die Zielposition wenigstens in umfänglicher Richtung der Soll-Position entspricht.

Bei der Umformbewegung können mehrere Leiterstücke aus unterschiedlichen radialen Reihen zeitgleich und insbesondere mit dem gleichen Drehsinn in die umfängliche Richtung bewegt werden. Eine erste Menge Leiterstücke auf einer ersten Kreisbahn (radial auf gleicher Höhe) kann in umfänglicher Richtung mit entgegengesetztem Drehsinn umgeformt werden, wie eine zweite Menge Leiterstücke auf einer zweiten Kreisbahn die radial versetzt zur ersten Kreisbahn angeordnet ist.

Insbesondere bei der umfänglichen Umformung aber auch generell kann die Abweichung der Ist-Ausgangsposition von der Soll-Ausgangsposition ein Versatz mehrerer freier Enden in umfänglicher Richtung sein, wobei der Versatz durch eine Rotation des Umformwerkzeugs vor dem Erfassen der Leiterstücke berücksichtigt werden kann. Das Umformwerkzeug kann insbesondere eine Twist-Krone sein.

Die Ist-Ausgangsposition kann unter Verwendung von Lasertriangulation identifiziert werden. Entsprechend kann die Abweichung der Ist-Ausgangsposition von der Soll-Ausgangsposition des freien Endes des umzuformenden Leiterstücks unter Verwendung von Lasertriangulation ermittelt werden. Beispielsweise kann ein Linienlaserscanner eingesetzt werden. Der Stator kann beispielsweise unter dem Linienlaserscanner durchrotiert werden und/oder der Linienlaserscanner kann den Stator abtasten. Das Abtasten kann durch eine Rotationsbewegung oder eine lineare Bewegung umgesetzt werden. Der Stator kann auch translatorisch an dem Sensor vorbeigeführt werden. Der Linienlaserscanner kann auch jeweils direkt vor einem radialen Umformen die umzuformenden Leiterstücke vermessen. Typischerweise wird jedoch zunächst der gesamte Stator vermessen, also die Ist-Ausgangsposition aller freier Enden der Leiterstücke ermittelt.

Denkbar sind auch andere Sensoren, die die Positionen der Pins erfassen, bspw. ein taktiler Sensor oder ein Ultraschallsensor. Der Sensor kann die Oberfläche des Stators abtasten oder er kann die gesamte Oberfläche in einem Messschritt erfassen. Verschieden Abtastsequenzen sind dabei möglich im Sinne der Erfindung.

Die Ist-Ausgangsposition kann unter Verwendung von stereoskopischen Aufnahmen ermittelt werden. Entsprechend kann die Abweichung der Ist-Ausgangsposition von der Soll-Ausgangsposition des freien Endes des umzuformenden Leiterstücks unter Verwendung von stereoskopischen Aufnahmen ermittelt werden.

### Figuren

Nachfolgend wird die Erfindung unter Bezugnahme auf die beiliegenden Zeichnungen erläuternd. In der Zeichnung zeigen:
Figur 1 eine schematische perspektivische Darstellung eines Stators mit Steckspulen nach einem Aufweiten und Twisten;
Figur 2 eine schematische Darstellung einer Erfassung der Position von freien Enden von Steckspulen in einem symbolisch dargestellten Stator mittels eines Profilsensors;
Figur 3 eine schematische Darstellung einer Erfassung der Position von freien Enden von Steckspulen in einem symbolisch dargestellten Stator mittels eines alternativen Profilsensors;
Figur 4 eine schematische Darstellung eines Ablaufschemas des erfindungsgemäßen Verfahrens;
Figur 5 eine schematische Darstellung eines Teilbereichs eines alternativen Umformwerkzeugs; und
Figur 6 eine schematische Darstellung eines Umformwerkzeugs.

In den Figuren tragen entsprechende Elemente und Bereiche gleiche Bezugszeichen. Nicht in allen Figuren sind sämtliche Bezugszeichen wiedergegeben.

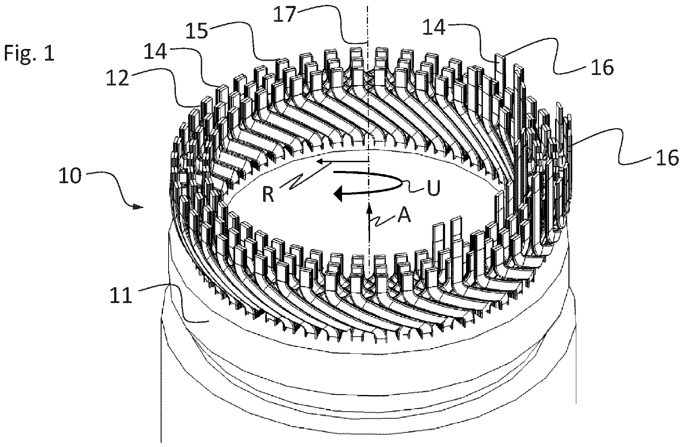

Figur 1 zeigt eine schematische perspektivische Darstellung eines Stators 10 mit in einem Blechpaket 11 eingesetzten und getwisteten Leiterstücken 12. Die Leiterstücke 12 sind auf in Umfangsrichtung U erstreckten Kreisbahnen angeordnet. Die Leiterstücke 12 weisen jeweils abisolierte einzelne freie Enden 14 auf, welche in eine axiale Richtung A erstreckt ausgerichtet sind. Die einzelnen freien Enden 14 sind dabei vorliegend derart angeordnet, dass überwiegend jeweils zwei einzelne freie Enden 14 zusammen positioniert sind und effektiv ein gemeinsames freies Ende 15 bilden, welches durch späteres Verschweißen stoffschlüssig verbunden wird. Die Leiterstücke 12 sind überwiegend als im Wesentlichen U-förmig ausgebildete Hairpins ausgebildet (die U Form ist in der Figur nicht dargestellt, sondern der die jeweils beiden Schenkel eines Hairpins verbindende Verbindungsabschnitt liegt auf der nicht gezeigten anderen Seite des Stators). Der Stator 10 umfasst aber auch einzelne Sonderpins 16, die eine abweichende Geometrie haben, bspw. längere Schenkel mit einzelnen freien Enden 14, wobei diese einzelnen freien Enden 14 teilweise einzeln und nicht paarweise angeordnet sind. Verschiedene Pinformen und Arten sind im Sinne der Erfindung möglich.

Ein freies Ende 14 im Sinne der Erfindung ist ein einzelnes freies Ende 14, also das Ende eines Schenkels eines einzelnen Leiterstücks 12. Der Stator ist im Wesentlichen rotierbar um die Rotationsachse 17, die in axialer Richtung A verläuft.

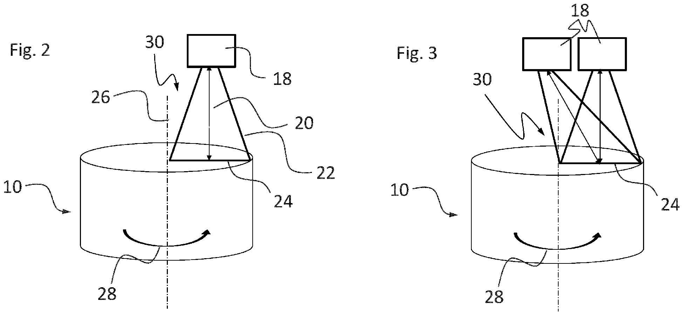

Figur 2 zeigt eine schematische Darstellung einer Vermessung der Position von freien Enden 14 von Leiterstücken 12 in einem symbolisch dargestellten Stator 10 mittels eines Profilsensors 18, der in einem Abstand 20 zur Oberfläche des Stators 10 angeordnet ist. Der Abstand 20 variiert dabei über die Oberfläche des Stators 10 hinweg, je nach Geometrie des Stators.

Der Profilsensor 18 ist als Laserliniensensor ausgebildet und sendet ein fächerförmiges Lasersignal auf die Oberfläche des Stators 10, welches einen linienförmigen direkten Erfassungsbereich 24 ergibt, damit ist gemeint, dass in einem Messvorgang mehrere Messpunkte entlang des Erfassungsbereichs 24 vermessen werden. Das an der Oberfläche des Stators 10 im Bereich des linienförmigen direkten Erfassungsbereichs 24 reflektierte Lasersignal wird im Profilsensor 18 punktweise empfangen und über Messung der Signallaufzeit der jeweilige Abstand in jedem Messpunkt im Erfassungsbereich 24 ermittelt. Eine alternative Erstreckung eines möglichen Erfassungsbereichs 24 kann auf die Breite einer Seite des Stators 10 beschränkt sein. Um die komplette Oberfläche des Stators 10 zu erfassen, wird der Stator 10 um die Rotationsachse 17 rotiert, was durch den Pfeil 28 angedeutet ist. Auf diese Weise werden im vorliegenden Beispiel die unterschiedlichen Bereiche der Oberfläche des Stators 10 dem linienförmigen direkten Erfassungsbereich 24 zugeführt.

Unter Berücksichtigung der jeweiligen Drehstellung des Stators 10 im Messbereich 30 des Profilsensors 18 werden die einzelnen linienartig angeordneten Messpunkte 32 zu einer Gesamtmessung zusammengefügt.

Figur 3 zeigt eine schematische Darstellung einer alternativen Vermessung der Position von freien Enden 14 von Leiterstücken 12 in einem symbolisch dargestellten Stator 10 mittels eines Profilsensors 18, der in einem Abstand 20 zur Oberfläche des Stators 10 angeordnet ist.

Der Profilsensor 18 ist in Figur 3 als stereoskopischer Profilsensor ausgebildet und nimmt Bereiche der Oberfläche oder die gesamte Oberfläche des Stators aus verschiedenen Winkeln auf. Durch die gemeinsame Analyse der Bilder aus verschiedenen Winkeln kann ein Oberflächenprofil des Stators gemessen werden.

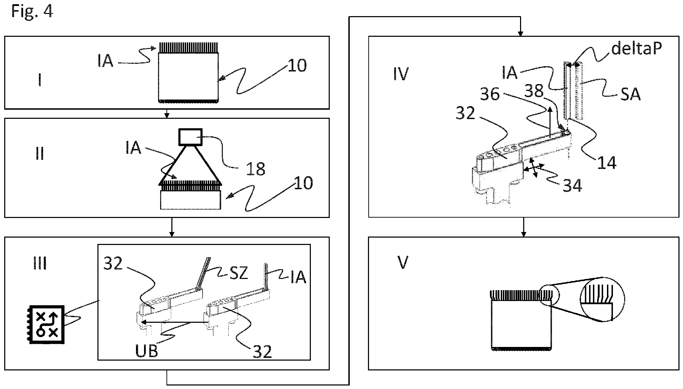

Im Rahmen des Verfahrens, wie in Figur 4 illustriert, wird zunächst in einem Schritt I ein Stator 10 mit Leiterstücken 12 bereitgestellt, die auf einer Seite des Stators 10 aus diesem herausragen und sich in einer Ist-Ausgangsposition IA befinden.

In einem Schritt II erfolgt ein Identifizieren der Ist-Ausgangsposition IA wenigstens eines freien Endes 14 eines umzuformenden Leiterstücks 12.

In einem Schritt III kann ein Bestimmen einer Umformbewegung UB erfolgen mittels derer das freie Ende 14 des umzuformenden Leiterstücks 12 von der Ist-Ausgangsposition IA in eine Soll-Zielposition SZ umgeformt werden kann. Es kann in diesem Schritt also die Bewegung bestimmt werden, die ein Umformwerkzeug 32 ausführen muss, um das umzuformende Leiterstück 12 von der Ist-Ausgangsposition IA in eine Soll-Zielposition SZ zu bewegen.

In einem Schritt IV erfolgt ein Erfassen des freien Endes 14 des umzuformenden Leiterstücks 12 mittels eines Umformwerkzeugs 32, wobei eine Abweichung deltaP der Ist-Ausgangsposition von einer Soll-Ausgangsposition SA des freien Endes 14 des umzuformenden Leiterstücks 12 beim Erfassen berücksichtigt wird und das Umformwerkzeug 32 das umzuformende Leiterstück 12 in seiner Ist-Ausgangsposition IA erfasst.

In dem in Figur 4 figürlich dargestellten Beispiel wird hierzu das Umformwerkzeug 32 in der Horizontalebene derart bewegt, dass es direkt unterhalb der freien Endes 14 des Leiterstücks 12 in der Ist-Ausgangsposition IA platziert ist und nicht bzgl. der Soll-Ausgangsposition SA platziert wird. Um das freie Ende 14 zu fassen, wird das Umformwerkzeug 32 dann entlang der axialen Richtung angehoben (siehe Pfeil 36). Das Umformwerkzeug 32 weist eine Aufnahmeöffnung auf, in welcher das freie Ende 14 beim Aufwärtsbewegen aufgenommen wird. Das Umformwerkzeug 32 wie es in Figur 4, insbesondere Schritt III und IV gezeigt ist, ist ein Aufweitwerkzeug 32, dass dazu dient Leiterstücke 12 in radialer Richtung R umzuformen.

In einem Schritt V erfolgt nach dem Erfassen aus Schritt IV ein Umformen des umzuformenden Leiterstücks 12 aus seiner Ist-Ausgangsposition IA in seine Soll-Zielposition SZ, wobei das Umformwerkzeug 32 das erfasste umzuformende Leiterstück 12 insbesondere mittels der vorher bestimmten Umformbewegung UB umformt.

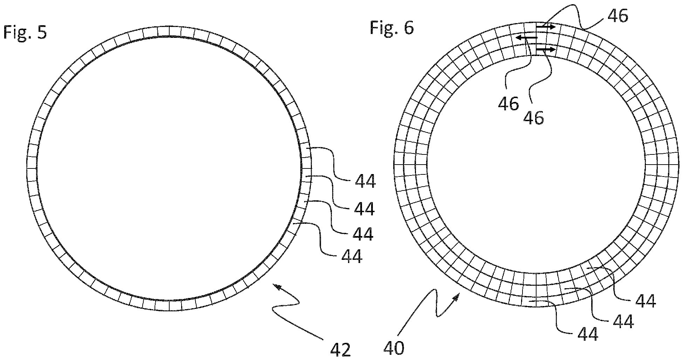

Insbesondere können mehrere Leiterstück 12 gleichzeitig oder aufeinanderfolgend gemäß Schritt V umgeformt werden. Das gleichzeitige Umformen kann insbesondere mit einem Twistwerkzeug 40 (als Beispiel für ein Umformwerkzeug 32), wie es in Figur 6 gezeigt ist, erfolgen.

Figur 5 zeigt einen Teilbereich eines Twistwerkzeugs 40 in schematischer Darstellung. Genauer gesagt zeigt Figur 5 eine einzelne Twistkrone 42. Diese weist eine Vielzahl Aufnahmen 44 auf die auf einer Kreisbahn angeordnet sind. Die Aufnahmen 44 sind derart ausgebildet und angeordnet, dass sie nach dem Aufweiten jeweils ein Leiterstück 12 aufnehmen können. Um die einzelnen Leiterstücke auf den unterschiedlichen Kreisbahnen twisten (umformen in umfänglicher Richtung) zu können, weist das Twistwerkzeugs 40 mehrere konzentrisch zueinander angeordnete Twistkronen 42 mit unterschiedlichem Durchmesser auf, wie in Figur 6 schematisch illustriert. Die Twistkronen 42 können zur Durchführung des Umformvorgangs in umfänglicher Richtung gegeneinander verdreht werden, was durch die Bewegungspfeile 46 illustriert ist.

Um den Versatz zwischen Soll-Ausgangsposition SA und Ist-Ausgangsposition IA zu berücksichtigen, können die einzelnen Twistkronen 42 rotiert werden, um auf die Ist-Ausgangsposition IA abgestimmt platziert zu werden. Durch ein axiales Bewegen des Twistwerkzeugs 40 auf den Stator 10, werden die Leiterstücke 12 dann in die Aufnahmen 44 eingeführt. anschließend erfolgt das Umformen (Twisten) durch rotieren der Twistkronen 42 mit Leiterstücken 12 (bzw. deren freien Enden 14) in den Aufnahmen 44.

## Patentansprüche

1. Verfahren zum Umformen von Leiterstücken (12) in einem Stator (10), wobei das Verfahren umfasst:
- (Schritt I) Bereitstellen eines Stators (10) mit Leiterstücken (12), wobei freie Enden (14) der Leiterstücke (12) auf einer Seite des Stators (10) aus diesem herausragen und sich in einer Ist-Ausgangsposition (IA) befinden;
- (Schritt II) Identifizieren der Ist-Ausgangsposition (IA) wenigstens eines freien Endes (14) eines umzuformenden Leiterstücks (12);
- (Schritt III) Insbesondere Bestimmen einer Umformbewegung (UB) mittels derer das freie Ende (14) des umzuformenden Leiterstücks (12) von der Ist-Ausgangsposition (IA) in eine Zielposition (Z) umgeformt werden kann, wobei die Zielposition (Z) wenigstens einer Richtung der Soll-Zielposition (SZ) des umzuformenden Leiterstücks (12) entspricht;
- (Schritt IV) Erfassen des freien Endes (14) des umzuformenden Leiterstücks (12) mittels eines Umformwerkzeugs (32, 40), wobei eine Abweichung der Ist-Ausgangsposition (IA) von einer Soll-Ausgangsposition (SA) des freien Endes (14) des umzuformenden Leiterstücks (12) in wenigstens einer radialen Richtung und/oder einer umfänglichen Richtung beim Erfassen berücksichtigt wird und das Umformwerkzeug (32, 40) das umzuformende Leiterstück (12) in der berücksichtigten Richtung seiner Ist-Ausgangsposition (IA) erfasst;
- (Schritt V) Umformen des umzuformenden Leiterstücks (12) aus seiner Ist-Ausgangsposition (IA) in eine Zielposition (SZ), wobei die Zielposition (Z) wenigstens in der berücksichtigten Richtung der Soll-Position (SZ) des umzuformenden Leiterstücks (12) entspricht, wobei das Umformwerkzeug (32, 40) das erfasste umzuformende Leiterstück (12) insbesondere mittels der vorher bestimmten Umformbewegung umformt.

2. Verfahren nach Anspruch **1,** wobei die Umformbewegung in Schritt V eine Biegebewegung ist, bei der das freie Ende (14) des umzuformenden Leiterstücks (12) radial ein- oder auswärts bewegt wird, insbesondere wobei jedenfalls ein Versatz in radialer Richtung in Schritt IV berücksichtigt ist und in Schritt V die Zielposition wenigstens in radialer Richtung der Soll-Position (SZ) entspricht.

3. Verfahren nach einem der vorigen Ansprüche, wobei das Umformwerkzeug (32) ausgebildet ist, um ein einzelnes Leiterstück (12) zu erfassen oder mehrere in einer in radialer Richtung (R) erstreckten Reihe angeordnete Leiterstücke (12) zu erfassen.

4. Verfahren nach einem der vorigen Ansprüche, wobei das Umformwerkzeug (32) Greifbacken aufweist, die aufeinander zubewegbar sind und beim Erfassen des Leiterstücks (12), insbesondere tangential zur Umfangsrichtung (U), aufeinander zu bewegt werden.

5. Verfahren nach einem der vorigen Ansprüche, wobei das Umformwerkzeug (32) beim Erfassen das Leiterstück (12) oder eines der umzuformenden Leiterstücke (12) von radial innen hintergreift.

6. Verfahren nach Anspruch 1, wobei die Umformbewegung in Schritt V eine Biegebewegung ist, bei der mehrere freie Enden (14) umzuformender Leiterstücke (12) in einer umfänglichen Richtung (U) bewegt werden, insbesondere wobei jedenfalls ein Versatz in umfänglicher Richtung in Schritt IV berücksichtigt ist und in Schritt V die Zielposition wenigstens in umfänglicher Richtung der Soll-Position (SZ) entspricht.

7. Verfahren nach dem vorigen Anspruch, wobei die Abweichung der Ist-Ausgangsposition (IA) von der Soll-Ausgangsposition (SA) ein Versatz mehrerer freier Enden (14) in umfänglicher Richtung (U) ist, wobei der Versatz durch eine Rotation des Umformwerkzeugs (32, 40) vor dem Erfassen der Leiterstücke berücksichtigt wird, insbesondere wobei das Umformwerkzeug (32, 40) eine Twist-Krone (42) aufweist.

8. Verfahren nach einem der vorigen Ansprüche, wobei die Abweichung der Ist-Ausgangsposition (IA) von der Soll-Ausgangsposition (SA) des freien Endes (14) des umzuformenden Leiterstücks (12) unter Verwendung von Lasertriangulation ermittelt wird.

9. Verfahren nach einem der vorigen Ansprüche, wobei die Abweichung der Ist-Ausgangsposition (IA) von der Soll-Ausgangsposition (SA) des freien Endes des umzuformenden Leiterstücks (12) unter Verwendung stereoskopischer Aufnahmen ermittelt wird.

10. Verfahren nach einem der vorigen Ansprüche, wobei nach dem Identifizieren der Ist-Ausgangsposition (IA) basierend auf den identifizierten Ist-Ausgangspositionen (IA) eine Identifikation eines Stator-Typs erfolgt.
